# EUROPEAN PATENT APPLICATION

(11) **EP 2 743 141 A1**
(43) Date of publication of application: **18.06.2014**
(21) Application number: 12196698.0
(22) Date of filing: 12.12.2012
(51) Int. Cl.: B60R 21/015, B60R 16/037

(54) **Control arrangement for vehicle**

(71) Applicant: Volvo Car Corporation, 40 531 Göteborg (SE)
(72) Inventor: Carlsson, Stina, 426 68 Västra Frölunda (SE); Vinranke, Martin, 417 21 Göteborg (SE); Soininen, Martti, 416 80 Göteborg (SE); Hellgård, Tove, 422 57 Hisings Backa (SE)
(74) Representative: Widahl, Jenny Marie

(57) **Abstract**

A control arrangement (1) for a vehicle (3) is provided comprising one or more vehicle safety-arrangements (5.1, 5.2, 5.3, 5.4, 5.5, 5.6, 5.7, 5.8). The control arrangement (1) comprises a memory unit (7), a processing unit (9), and an imaging unit (11.1, 11.2). At least one image depicting a person is arranged to be stored on the memory unit (7). Each one of the at least one image is associated with personal properties of the person depicted on the image, which are also arranged to be stored on the memory unit (7). The imaging unit (11.1, 11.2) is adapted to capture one or more images of occupants (12.1-12.3) in the vehicle (3) and the processing unit (9) is adapted to compare the images captured with the images stored on the memory unit (7) in order to identify vehicle occupants (12.1-12.3) and their associated personal properties. The control arrangement (1) is arranged to use personal properties identified to control one or more of the vehicle safety-arrangements (5.1, 5.2, 5.3, 5.4, 5.5, 5.6, 5.7, 5.8). The invention also relates a vehicle (3) comprising a control arrangement (1) and a method of controlling one or more vehicle safety-arrangements (5.1, 5.2, 5.3, 5.4, 5.5, 5.6, 5.7, 5.8) comprised in a vehicle (3).

## Description

### TECHNICAL FIELD

The present invention relates to a control arrangement for a vehicle comprising one or more vehicle safety-arrangements. The present invention further relates to a method of controlling one or more vehicle safety-arrangements comprised in a vehicle.

### BACKGROUND

Studies have shown that personal properties of vehicle-occupants, such as age, gender, personal conditions, and/or diseases affect the risk of injury in a vehicle-accident. Therefore, information about the personal properties of vehicle occupants can be used to improve vehicle occupant safety by adjusting vehicle safety-arrangements in dependence of the personal properties of vehicle occupants. Also, the information can be used in other ways to improve overall vehicle occupant safety. The document DE19936528A1 discloses a control system utilizing personal details such as size, weight, age, and sex of usual occupants of a vehicle in order to control function of safety devices such as seat belts and airbags, plus in the case of the driver, mirror and seat positions. The document proposes that intended occupants should have a personal portable storage device comprising personal details and that each seat should be fitted with an appropriate reader. Such a system is associated with some drawbacks such that the system only is arranged to utilize personal details for some intended occupants, i.e. occupants normally using a particular vehicle. Accordingly, by only utilizing personal details of occupants normally using a vehicle, other occupants cannot benefit from the safety improving contribution the system offers. Also, there is a risk that occupants mixes up such personal portable storage devices and thus thereby risks inputting a personal portable storage device belonging to another person in a reader fitted in the own vehicle seat. Such situation is potentially dangerous since function of safety devices such as seat belts and airbags are controlled in dependence of inputted personal details. Accordingly, there is a need for an arrangement and method overcoming the above mentioned drawbacks with the prior-art systems to ensure knowledge of occupants in a vehicle in order to improve overall vehicle occupant safety.

### SUMMARY

An object of the present invention is to ensure knowledge of occupants in a vehicle to improve overall vehicle occupant safety.

According to an aspect of the invention, the object is achieved by a control arrangement for a vehicle comprising one or more vehicle safety-arrangements, the control arrangement comprising a memory unit, a processing unit, and an imaging unit, the memory unit is arranged to communicate with the processing unit and the imaging unit, at least one image depicting a person is arranged to be stored on the memory unit, each one of the at least one image is associated with personal properties of the person depicted on the image, which are also arranged to be stored on the memory unit, the personal properties comprise one or more of height, weight, gender, age, personal conditions, and/or diseases, where the imaging unit is adapted to capture one or more images of occupants in the vehicle and the processing unit is adapted to compare the images captured with the images stored on the memory unit in order to identify vehicle occupants and their associated personal properties, and that the control arrangement is arranged to use personal properties identified to control one or more of the vehicle safety-arrangements.

Since vehicle occupants and their associated personal properties are identified by comparing the images captured with the images stored on the memory, knowledge of occupants in a vehicle is ensured. Since the control arrangement is arranged to use personal properties identified to control one or more of the vehicle safety-arrangements, overall vehicle occupant safety is improved.

As a result, the above mentioned object is achieved.

According to some embodiments, the imaging unit is adapted to capture the image upon start-up of the vehicle. By capture the image upon start-up of the vehicle, vehicle occupants and their personal properties can be identified upon start-up of the vehicle. In that way, the identification can be performed each time the vehicle is to be driven and the vehicle occupants and their personal properties can be identified before starting a journey with the vehicle. As a result, knowledge of occupants in the vehicle is ensured at each use of the vehicle and since the control arrangement is arranged to use personal properties identified to control one or more of the vehicle safety-arrangements, the overall vehicle occupant safety is further improved.

According to some embodiments, the imaging unit is further adapted to capture the image a predetermined time after a vehicle door has been opened and closed during a vehicle stand still. Such predetermined time may for example be 2-10 seconds. Through capturing the image at such an occasion, potentially newly arrived and/or replaced vehicle occupants and their personal properties can be identified. As an alternative, or in combination herewith, the imaging unit may further be adapted to capture the image upon request by an occupant. Thereby, an occupant may request the imaging unit to capture the image when a new occupant has entered the vehicle. As a result, knowledge of occupants in the vehicle is further ensured.

According to some embodiments, the control arrangement comprises an input unit which is arranged to allow vehicle occupants to input their personal properties and to associate their personal properties with an image stored on the memory unit. By allowing vehicle occupants to input their personal properties and to associate their personal properties with an image stored on the memory unit, the functionality of the control arrangement is improved.

According to some embodiments, the control arrangement comprises a first output unit which is adapted to request vehicle occupants not having been identified during the comparison, to input their personal properties via the input unit. By requesting vehicle occupants not having been identified during the comparison, to input their personal properties via the input unit, knowledge of vehicle occupants and their personal properties is further improved and since the control arrangement is arranged use the personal properties identified to control one or more of the vehicle safety-arrangements, the overall vehicle occupant safety is further improved.

According to some embodiments, one or more vehicle safety-arrangement comprises one or more of an airbag system, a seat belt tensioner, knee bolster, side bolster, movable seat system, a traction control system, a brake system, an active brake system, an adaptive cruise control, and/or a lane keeping system. By controlling one or more of such vehicle safety-arrangement by using personal properties identified, the overall vehicle occupant safety is further improved.

According to some embodiments, the vehicle further comprises one or more vehicle systems comprising one or more of a seat positioner unit and/or a mirror positioner unit, the control arrangement is arranged to use personal properties identified to control one or more of the vehicle systems. By controlling one or more of such vehicle systems by using personal properties identified, the overall vehicle occupant safety is further improved.

According to some embodiments, one of the one or more vehicle safety-arrangements comprises a second output unit which is adapted to transmit stored personal properties to a rescue/health-organization in case of an accident. By transmitting stored personal properties to a rescue/health-organization in case of an accident, the overall vehicle occupant safety is further improved since the rescue/health-organization is able to receive the personal properties at least shortly after an accident and are thereby able to be better to prepared when initiating a rescue operation.

According to some embodiments, the personal conditions and/or diseases comprises one or more of blood type, osteoporosis, haemophilia, epilepsy, diabetes and/or allergy. Since such personal conditions and/or diseases are comprised in the personal properties and the personal properties, according to some embodiments, are arranged to be transmitted by the second output unit to a rescue/health-organization in case of an accident, the overall vehicle occupant safety is further improved since the rescue/health-organization is able to be informed of such personal conditions and/or diseases and thereby is able to be better to prepared when initiating a rescue operation.

According to some embodiments, one of the one or more vehicle safety-arrangements comprises a third output unit which is arranged to provide information concerning at least one of a position of seat or a position of mirrors on the basis of the identified personal properties. By using personal properties comprising one or more of height, weight, gender, age, and/or personal conditions, to provide information concerning at least one of a position of seat or a position of mirrors, the overall vehicle occupant safety is further improved since the personal properties can be used to improve forward vision, interaction with mirrors and vehicle system interfaces, adjusting the position of the seat relative one or more vehicle safety-arrangements such as air bags etc.

According to an aspect of the invention, the object is achieved by a method of controlling one or more vehicle safety-arrangements comprised in a vehicle, using a control arrangement comprising a memory unit, a processing unit, and an imaging unit, the memory unit being arranged to communicate with the processing unit and the imaging unit, at least one image depicting a person being arranged to be stored on the memory unit, and each one of the at least one image is associated with personal properties of the person depicted on the image, which are also arranged to be stored on the memory unit, the personal properties comprising one or more of height, weight, gender, age, personal conditions, and/or diseases, the method comprising;
- capturing, using the imaging unit, one or more images of occupants in the vehicle, and
- identifying vehicle occupants and their associated personal properties by comparing the images captured with the images stored on the memory unit, using the processing unit, and
- controlling one or more of the vehicle safety-arrangements using the personal properties identified.

Again, since vehicle occupants and their associated personal properties are identified by comparing the images captured with the images stored on the memory, knowledge of occupants in a vehicle is ensured. Since control arrangement is arranged use the personal properties identified to control one or more of the vehicle safety-arrangements, overall vehicle occupant safety is improved.

As a result, the above mentioned object is achieved.

According to some embodiments, the method comprises;
- allowing vehicle occupants to input their personal properties and to associate their personal properties with an image stored on the memory unit, using an input unit being comprised in the control arrangement, and
- requesting vehicle occupants not having been identified during the comparison, to input their personal properties via the input unit, using a first output unit comprised in the control arrangement.

By allowing vehicle occupants to input their personal properties and to associate their personal properties with an image stored on the memory unit, the functionality of the control arrangement is improved. By requesting vehicle occupants not having been identified during the comparison, to input their personal properties via the input unit, the knowledge of vehicle occupants and their personal properties is further improved and since the control arrangement is arranged use the personal properties identified to control one or more of the vehicle safety-arrangements, the overall vehicle occupant safety is further improved.

According to some embodiments, the method comprises;
- transmitting stored personal properties to a rescue/health-organization in case of an accident, using a second output unit being comprised in one of the one or more vehicle safety-arrangements.

By transmitting stored personal properties to a rescue/health-organization in case of an accident, the overall vehicle occupant safety is further improved since the rescue/health-organization is able to receive the personal properties at least shortly after an accident and are thereby able to be better to prepared when initiating a rescue operation.

Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates a control arrangement 1 for a vehicle 3 comprising one or more vehicle safety-arrangements 5.1, 5.2, 5.3, 5.4, 5.5, 5.6, 5.7, 5.8.
Fig. 2 illustrates a method of controlling one or more vehicle safety-arrangements.

### DETAILED DESCRIPTION

The embodiments herein will now be described more fully with reference to the accompanying drawings, in which example embodiments are shown. Disclosed features of example embodiments may be combined as readily understood by one of ordinary skill in the art to which this invention belongs. Like numbers refer to like elements throughout.

Well-known functions or constructions will not necessarily be described in detail for brevity and/or clarity.

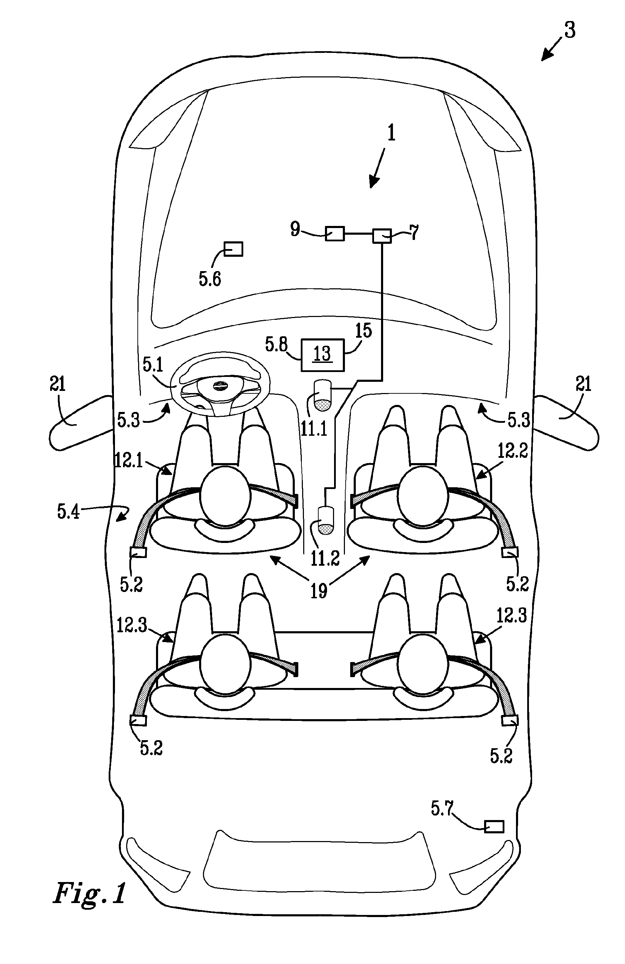

Fig. 1 illustrates a control arrangement 1 for a vehicle 3 comprising one or more vehicle safety-arrangements 5.1, 5.2, 5.3, 5.4, 5.5, 5.6, 5.7, 5.8. The control arrangement 1 comprises a memory unit 7, a processing unit 9, and an imaging unit 11.1, 11.2. The memory unit 7 is arranged to communicate with the processing unit 9 and the imaging unit 11.1, 11.2. At least one image depicting a person is arranged to be stored on the memory unit 7. Each one of the at least one image is associated with personal properties of the person depicted on the image, which are also arranged to be stored on the memory unit 7. The personal properties comprise one or more of height, weight, gender, age, personal conditions, and/or diseases. The imaging unit 11.1, 11.2 is adapted to capture one or more images of occupants 12.1-12.3 in the vehicle 3 and the processing unit 9 is adapted to compare the images captured with the images stored on the memory unit 7 in order to identify vehicle occupants 12.1-12.3 and their associated personal properties. The control arrangement 1 is arranged to use personal properties identified to control one or more of the vehicle safety-arrangements 5.1, 5.2, 5.3, 5.4, 5.5, 5.6, 5.7, 5.8.

The imaging unit 11.1, 11.2 comprises a first imaging unit 11.1 being capable of capturing an image of the driver 12.1 and front seat passenger 12.2. In addition, the first imaging unit 11.1 may also be capable of capturing an image of back seat passengers 12.3. Alternatively, the imaging unit 11.1, 11.2 may comprise a second imaging unit 11.2 arranged to capture an image of back seat passengers 12.3. In other embodiments the imaging unit 11.1, 11.2 comprises further imaging units e.g. imaging units arranged at the headrests of the front seats being arranged to capture images of back seat passengers 12.3. Likewise, two imaging units may be arranged in a front region of the vehicle interior where one of the two imaging units is arranged to capture an image of the driver 12.1 and the second is arranged to capture an image of the front seat passenger 12.2. In all embodiments described, the imaging units may form part of a camera system and/or an imaging system being capable of capturing a digital image representation of occupants 12.1-12.3 in the vehicle 3.

The imaging unit may be adapted to capture the image upon start-up of the vehicle and/or a predetermined time after a vehicle door has been opened and closed during a vehicle stand still and/or upon request by an occupant.

The processing unit 9 may comprise one or more processing units, such as one or more processors, being capable of comparing the images captured by the imaging unit 11.1, 11.2 with the images stored on the memory unit 7 in order to identify vehicle occupants 12.1-12.3 and their associated personal properties.

The memory unit 7 may comprise one or more memory devices being capable of storing images and personal properties.

The at least one image stored on the memory unit 7 may be one or more images of occupants in the vehicle 3 captured by the imaging unit 11.1, 11.2 at one or more previous occasions. Alternatively, or in combination, an occupant 12.1, 12.2, 12.3 may transmit an image depicting him- or herself using a portable communication device such as a smart phone or a computer or the like to the memory unit 7 to thereby store the image on the memory unit 7.

According to some embodiments, the control arrangement 1 comprises an input unit 13 which is arranged to allow vehicle occupants 12.1, 12.2, 12.3 to input their personal properties and to associate their personal properties with the image stored on the memory unit 7. Such an input unit 13 may comprise a screen, such as a touch sensitive screen, allowing vehicle occupants 12.1, 12.2, 12.3 to input their personal properties and to associate their personal properties with an image stored on the memory unit 7. According to some embodiments, the input unit 13 allows vehicle occupants 12.1, 12.2, 12.3 to input their personal properties from a list of alternatives and/or via free-text input. Such free-text input may compare inputted free-text with text in a database to recognize inputted personal properties. Such a database may be stored on the memory unit 7 and/or be stored at a remote location. As an alternative or in combination, the input unit 13 comprises a microphone and a voice recognition device arranged to allow occupants 12.1, 12.2, 12.3 to input their personal properties and/or associate their personal properties with the image stored on the memory unit 7 via voice input.

Further, according to some embodiments, the input unit 7 comprises a communication device arranged to communicate with a portable communication device such as a smart phone or computer or the like. In such embodiments, the input unit 7 allows vehicle occupants 12.1, 12.2, 12.3 to input their personal properties and/or to associate their personal properties with an image stored on the memory unit by using a portable communication device such as a smart phone or computer or the like. The input unit 7 may further be arranged to allow vehicle occupants 12.1, 12.2, 12.3 to input their personal properties and/or to associate their personal properties with an image stored on the memory unit by using a separate application. The separate application may be a software module, such as a program or application (app) installed to, or residing on, a memory of a portable communication device, such as a smart phone, computer or the like. Thereby, the functionality of the control arrangement is further improved.

According to some embodiments, the control arrangement 1 comprises a first output unit 15 which is arranged to request vehicle occupants, not having been identified during the comparison, to input their personal properties via the input unit 13. In Fig. 1, the first output unit 15 is illustrated as a screen comprised in the input unit 13. However, according to some embodiments, the first output unit 15 comprises a speaker, a summer, and/or a head-up display unit arranged to request vehicle occupants not having been identified during the comparison, to input their personal properties via the input unit 13.

According to some embodiments, the one or more vehicle safety-arrangements comprises an airbag system 5.1, a seat belt tensioner 5.2, a knee bolster 5.3, a side bolster 5.4, a movable seat system 5.5, a traction control system 5.6, a brake system 5.6, an active brake system 5.6, an adaptive cruise control 5.6, and/or a lane keeping system 5.6. In embodiments where the vehicle safety-arrangements comprises an airbag system 5.1, a deployment pressure of an airbag in the airbag system 5.1 may be controlled in dependence of personal properties such as weight, gender, age, personal conditions, and/or diseases. For example, the deployment pressure of the airbag may be lowered in case of an elderly person, or in case of disease such as osteoporosis. Likewise, in embodiments where the vehicle safety-arrangements comprise a seat belt tensioner 5.2, during a collision, a tension of the seat belt may be lowered in case of an elderly person, or in case of a disease such as osteoporosis. An elderly person is more likely to be injured in a vehicle accident and osteoporosis is a disease of bones that leads to an increased risk of fracture. Thereby, an elderly person, or a person with a disease such as osteoporosis, will be better protected in case of an accident due to the lowered airbag pressure and/or lowered tension by the seat belt tensioner 5.2. The seat belt tensioner 5.2 may be an electric seat belt tensioner or a pyrotechnic seat belt tensioner. In Fig. 1, the airbag system 5.1 is illustrated as a steering wheel airbag system, positioned at a centre of a steering wheel. However, according to some embodiments, the airbag system 5.1 may include a front seat passenger airbag system, side impact airbag system, side torso airbag system, curtain airbag system, knee airbag system, and/or rear curtain airbag system.

According to embodiments where the one or more vehicle safety-arrangements comprises a knee bolster 5.3 or side bolster 5.4, the control arrangement 1 may control such a bolster arrangement such that an activation force and/or an activation distance of the bolster is controlled in dependence of identified personal properties. For example, the activation force and/or activation distance of the bolster may be reduced in case of an elderly person, or in case of disease such as osteoporosis.

A movable seat system is a system capable of moving, with a considerable speed, an occupant seat lengthwise, in height, and/or at an angle in the event of an accident. In embodiments where one or more vehicle safety-arrangements comprise a movable seat system 5.5, the control arrangement 1 may use personal properties identified to control a movement of an occupant seat in any of these directions. For example, in case of an identification of an occupant 12.2 having a considerable height, e.g. 190 cm, the control arrangement 1 may control the movable seat system 5.5 such that the seat of the occupant 12.2 moves further in a direction backwards than compared to a seat occupied by a shorter person, in the event of a frontal impact. Likewise, in case of an identification of short occupant 12.1 having a height of e.g. 150 cm, the control arrangement 1 may control the movable seat system 5.5 such that the seat of the occupant 12.1 moves in a direction upwards at a frontal impact, e.g. to an optimal position in terms of interaction with an airbag of the airbag system 5.1.

In the above example embodiments and in other embodiments comprising seat-position based vehicle safety arrangements such as an airbag system 5.1, a seat belt tensioner 5.2, a knee bolster 5.3, a side bolster 5.4, a movable seat system 5.5 etc., the control arrangement 1 may control these vehicle safety arrangements individually, i.e. control the vehicle safety arrangement at each seat independently, i.e. in dependence of personal properties identified associated with an occupant seated in a particular seat. For example, if the control arrangement 1 has identified the personal property weight of the occupant (driver) 12.1 illustrated in Fig. 1 to 90 kg and the weight of the occupant 12.2 in the front passenger seat to 70 kg, a steering wheel airbag and front seat passenger airbag may be controlled such that these deploys with different pressures. Also, in the same example concerning weight of the occupants, a left seat seat belt tensioner 5.2 and a right seat seat belt tensioner 5.2 may be controlled such that these tension the respective seat belt with a different force in case of an accident. As understood by those skilled in the art, in the above mentioned examples, other personal properties such as height, gender, age, personal conditions, and/or diseases may be used to control vehicle safety arrangements individually.

Also, in the embodiments described, the control arrangement 1 may use personal properties to coordinate control of vehicle safety-arrangements such as the airbag system 5.1, the seat belt tensioner 5.2, the knee bolster 5.3, the side bolster 5.4, the movable seat system 5.5 to achieve synergetic effects to further improve occupant safety. For example, control of the seat belt tensioner 5.2 may be coordinated with the airbag system 5.1, the knee bolster 5.3, the side bolster 5.4, and/or the movable seat system 5.5 with regard to personal properties identified to achieve synergetic effects. Likewise, control of the airbag system 5.1 may be coordinated with the seat belt tensioner 5.2, the knee bolster 5.3, the side bolster 5.4, and/or the movable seat system 5.5 with regard to personal properties identified to achieve synergetic effects. Also, control of the movable seat system 5.5 may be coordinated with the airbag system 5.1, the seat belt tensioner 5.2, the knee bolster 5.3, and/or the side bolster 5.4 with regard to personal properties identified to achieve synergetic effects. For example, in case of an airbag activation of the air bag system 5.1, force and timing of the seat belt tensioner 5.2 and a motion of the movable seat system 5.5 may be different for a short or light occupant compared to a tall or heavy occupant, in order to optimize interaction between the occupant and the airbag of the airbag system 5.1.

In embodiments where one or more of the vehicle safety-arrangements comprise a traction control system 5.6, a brake system 5.6, an active brake system 5.6, an adaptive cruise control 5.6, and/or a lane keeping system 5.6, activation levels in such vehicle safety-arrangements 5.6 may be controlled using personal properties such as age, personal conditions, and/or diseases. For example, an activation level for such a vehicle safety-arrangement can be set to a different level in case of an elderly driver 12.1 and/or a driver 12.1 with a condition or disease affecting driving-ability. Studies have shown that an elderly person may have a smaller field of view when driving, partly due to a change in the eyes and partly due to less flexibility in the motion of the neck. In order to compensate for a possible smaller field of view, according to some embodiments, settings in the lane keeping system 5.6 is set to a different level for an elderly person driving. Also, according to some embodiments, settings in a vehicle safety-arrangement are set to a different level for a young person, and/or a person driving in training and/or a person with a recently issued driving license. By controlling one or more of such vehicle safety-arrangement by using personal properties identified, occupant safety is further improved.

According to some embodiments, the vehicle 3 further comprises one or more vehicle systems 19, 21 having one or more of a seat positioner unit 19, and/or a mirror positioner unit 21, and the control arrangement 1 is arranged to use personal properties identified to control one or more of the vehicle systems 19, 21. For example, the seat positioner unit 19 may be controlled with regard to height of an occupant to a position suitable for reaching pedals, or to a position where an appropriate distance to vehicle safety arrangements is obtained. Likewise, the mirror positioning unit may be controlled with regard to height of an occupant to a position suitable for rearward vision. The control arrangement 1 may be arranged to control both, or one of the seat positioner units 19, i.e. the seat positioner unit of the seat of the driver and the seat positioner unit of the seat of the front seat passenger using personal properties identified.

According to some embodiments, one of the one or more vehicle safety-arrangements comprises a second output unit which is adapted to transmit stored personal properties to a rescue/health-organization in case of an accident. The second output unit may comprise a radio-transmitter capable of transmitting the personal properties to the rescue/health-organization. The personal properties may comprise personal conditions and/or diseases comprising one or more of blood type, osteoporosis, haemophilia, epilepsy, diabetes and/or allergy. By transmitting such personal properties to the rescue/health-organization, the rescue/health-organization is able to be better to prepared when initiating a rescue operation. Except the personal properties, the second output unit may be adapted to transmit to the rescue/health-organization information such as the number of occupants 12.1, 12.2, 12.3 of the vehicle 3, a severity of an accident, the number of activated vehicle safety-arrangements 5.1, 5.2, 5.3, 5.4, 5.5, 5.6, 5.7, 5.8, and/or information about which safety-arrangements 5.1, 5.2, 5.3, 5.4, 5.5, 5.6, 5.7, 5.8 that have been activated. Also, according to some embodiments, the imaging unit 11.1, 11.2 is adapted to capture one or more images of vehicle occupants 12.1, 12.2, 12.3 after an accident which is transmitted, by the second output unit, to a rescue/health-organization. Also, for identification purposes, images stored on the memory unit 7, depicting the occupants 12.1, 12.2, 12.3 present in the vehicle 3 may be transmitted to the rescue/health-organization in the event of an accident. Further, according to some embodiments, the input unit 13 is arranged to allow vehicle occupants to input personal information comprising one or more of an identification information such as a social service number or similar and an ICE-number such as a telephone number to some close relative. In such embodiments, the second output unit may be adapted to transmit such personal information to the rescue/health-organization in case of an accident. Thereby, the overall vehicle occupant safety may be further improved.

Further, according to some embodiments, one of the one or more vehicle safety-arrangements comprises a third output unit which is arranged to provide information concerning at least one of a position of a seat or a position of the mirrors on the basis of the identified personal properties. That is, by using the personal property height the third output unit can provide information such as how to adjust the seat and/or mirrors with regard to forward and rearward vision, and the seat with regard to interaction with vehicle safety arrangements and vehicle interfaces. By providing such information, occupant safety may be further improved. In Fig. 1, the third output unit is illustrated as a screen comprised in the input unit 13 and the first output unit 15. However, according to some embodiments, the third output unit comprises a speaker and/or a head-up display unit arranged to provide information concerning at least one of a position of a seat or a position of the mirrors on the basis of the identified personal properties.

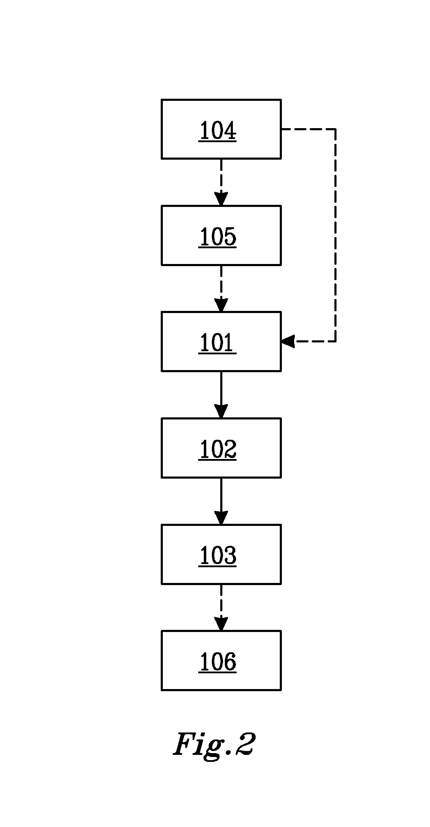

Fig. 2 illustrates a method of controlling one or more vehicle safety-arrangements comprised in a vehicle, using a control arrangement comprising a memory unit, a processing unit, and an imaging unit, the memory unit being arranged to communicate with the processing unit and the imaging unit, at least one image depicting a person being arranged to be stored on the memory unit, and each one of the at least one image is associated with personal properties of the person depicted on the image, which are also arranged to be stored on the memory unit, the personal properties comprising one or more of height, weight, gender, age, personal conditions, and/or diseases, the method comprising;
- capturing one or more images of occupants in the vehicle, using the imaging unit, and
- identifying vehicle occupants and their associated personal properties by comparing the images captured with the images stored on the memory unit, using the processing unit, and
- controlling one or more of the vehicle safety-arrangements using the personal properties identified.

Since vehicle occupants and their associated personal properties are identified by comparing the images captured with the images stored on the memory, knowledge of occupants in a vehicle is ensured. Since the control arrangement is arranged use the personal properties identified to control one or more of the vehicle safety-arrangements, overall vehicle occupant safety is improved.

According to some embodiments, the method comprises;
- allowing vehicle occupants to input their personal properties and to associate their personal properties with an image stored on the memory unit, using an input unit being comprised in the control arrangement, and
- requesting vehicle occupants not having been identified during the comparison, to input their personal properties via the input unit, using a first output unit comprised in the control arrangement.

By allowing vehicle occupants to input their personal properties and to associate their personal properties with an image stored on the memory unit, the functionality of the control arrangement is improved. By requesting vehicle occupants not having been identified during the comparison, to input their personal properties via the input unit, the knowledge of vehicle occupants and their personal properties is further improved and since the control arrangement is arranged use the personal properties identified to control one or more of the vehicle safety-arrangements, the overall vehicle occupant safety is further improved.

According to some embodiments, the method comprises;
- transmitting stored personal properties to a rescue/health-organization in case of an accident, using a second output unit being comprised in one of the one or more vehicle safety-arrangements.

By transmitting stored personal properties to a rescue/health-organization in case of an accident, the overall vehicle occupant safety is further improved since the rescue/health-organization is able to receive the personal properties at least shortly after an accident and are thereby able to be better to prepared when initiating a rescue operation.

As used herein, the common abbreviation "*e.g.*", which derives from the Latin phrase "exempli gratia," may be used to introduce or specify a general example or examples of a previously mentioned item, and is not intended to be limiting of such item. If used herein, the common abbreviation "*i.e*.", which derives from the Latin phrase "id est," may be used to specify a particular item from a more general recitation.

## Claims

1. A control arrangement (1) for a vehicle (3) comprising one or more vehicle safety-arrangements (5.1, 5.2, 5.3, 5.4, 5.5, 5.6, 5.7, 5.8), the control arrangement (1) comprising a memory unit (7), a processing unit (9), and an imaging unit (11.1, 11.2), the memory unit (7) being arranged to communicate with the processing unit (9) and the imaging unit (11.1, 11.2), at least one image depicting a person being arranged to be stored on the memory unit (7), **characterized in that** each one of the at least one image is associated with personal properties of the person depicted on the image, which are also arranged to be stored on the memory unit (7), the personal properties comprising one or more of height, weight, gender, age, personal conditions, and/or diseases, where the imaging unit (11.1, 11.2) is adapted to capture one or more images of occupants (12.1, 12.2, 12.3) in the vehicle (3) and the processing unit (9) is adapted to compare the images captured with the images stored on the memory unit (7) in order to identify vehicle occupants (12.1, 12.2, 12.3) and their associated personal properties, and that the control arrangement (1) is arranged to use personal properties identified to control one or more of the vehicle safety-arrangements (5.1, 5.2, 5.3, 5.4, 5.5, 5.6, 5.7, 5.8).

2. The control arrangement (1) according to claim 1 **characterized in that** the imaging unit (11.1, 11.2) is adapted to capture the image upon start-up of the vehicle (3).

3. The control arrangement (1) according to claim 1 or 2 **characterized in that** it comprises an input unit (13) which is arranged to allow vehicle occupants (12.1, 12.2, 12.3) to input their personal properties and to associate their personal properties with an image stored on the memory unit (7).

4. The control arrangement (1) according to claim 3 **characterized in that** it comprises a first output unit (15) which is adapted to request vehicle occupants not having been identified during the comparison, to input their personal properties via the input unit (13).

5. The control arrangement (1) according to any of the preceding claims **characterized in that** the one or more vehicle safety-arrangement comprises one or more of an airbag system (5.1), a seat belt tensioner (5.2), a knee bolster (5.3), a side bolster (5.4), a movable seat system (5.5), a traction control system (5.6), a brake system (5.6), an active brake system (5.6), an adaptive cruise control (5.6), and/or a lane keeping system (5.6).

6. The control arrangement (1) according to any of the preceding claims, **characterized in that** the vehicle (3) further comprises one or more vehicle systems (19, 21) comprising one or more of a seat positioner unit (19) and/or a mirror positioner unit (21), the control arrangement (1) is arranged to use personal properties identified to control one or more of the vehicle systems (19, 21).

7. The control arrangement (1) according to any of the preceding claims **characterized in that** one of the one or more vehicle safety-arrangements comprises a second output unit (5.7) which is adapted to transmit stored personal properties to a rescue/health-organization in case of an accident.

8. The control arrangement (1) according to claim 7 **characterized in that** the personal conditions and/or diseases comprises one or more of blood type, osteoporosis, haemophilia, epilepsy, diabetes and/or allergy.

9. The control arrangement (1) according to any one of the preceding claims **characterized in that** one of the one or more vehicle safety-arrangements comprises a third output unit (5.8) which is arranged to provide information concerning at least one of a position of seat or a position of mirrors on the basis of the identified personal properties.

10. A vehicle (3), **characterized in that** it comprises a control arrangement (1) according to any of the preceding claims.

11. A method of controlling one or more vehicle safety-arrangements (5.1, 5.2, 5.3, 5.4, 5.5, 5.6, 5.7, 5.8) comprised in a vehicle (3), using a control arrangement (1) comprising a memory unit (7), a processing unit (9), and an imaging unit (11.1, 11.2), the memory unit (7) being arranged to communicate with the processing unit (9) and the imaging unit (11.1, 11.2), at least one image depicting a person being arranged to be stored on the memory unit (7), and each one of the at least one image is associated with personal properties of the person depicted on the image, which are also arranged to be stored on the memory unit (7), the personal properties comprising one or more of height, weight, gender, age, personal conditions, and/or diseases, the method comprising;
- capturing (101) one or more images of occupants (12.1, 12.2, 12.3) in the vehicle (3), using the imaging unit (11.1, 11.2), and
- identifying (102) vehicle occupants (12.1, 12.2, 12.3) and their associated personal properties by comparing the images captured with the images stored on the memory unit (7), using the processing unit (9), and
- controlling (103) one or more of the vehicle safety-arrangements (5.1, 5.2, 5.3, 5.4, 5.5, 5.6, 5.7, 5.8) using the personal properties identified.

12. The method according to claim 11, **characterized in that** the method comprises;
- allowing (104) vehicle occupants (12.1, 12.2, 12.3) to input their personal properties and to associate their personal properties with an image stored on the memory unit (7), using an input unit (13) being comprised in the control arrangement (1), and
- requesting (105) vehicle occupants (12.1, 12.2, 12.3) not having been identified during the comparison, to input their personal properties via the input unit (13), using a first output unit (15) comprised in the control arrangement (1).

13. The method according to claim 11 or 12, **characterized in that** the method comprises;
- transmitting (106) stored personal properties to a rescue/health-organization in case of an accident, using a second output unit (5.7) being comprised in one of the one or more vehicle safety-arrangements.
